# EUROPEAN PATENT SPECIFICATION

(11) **EP 1 789 992 B1**
(45) Date of publication and mention of the grant of the patent: **01.04.2015**
(21) Application number: 05781681.1
(22) Date of filing: 31.08.2005
(51) Int. Cl.: H01J 61/34, H01J 61/30, H01J 61/12, H01J 61/82

(54) **DISCHARGE LAMP WITH OPTIMIZED SALT FILLING**
ENTLADUNGSLAMPE MIT OPTIMIERTER SALZFÜLLUNG
LAMPE A DECHARGE AVEC REMPLISSAGE AUX SELS OPTIMISE

(30) Priority: 02.09.2004 EP 04104229
(43) Date of publication of application: 30.05.2007
(73) Proprietor: Philips Intellectual Property & Standards GmbH, 20099 Hamburg (DE); Koninklijke Philips N.V., 5656 AE Eindhoven (NL)
(72) Inventor: KUBON, Marcus, 52066 Aachen (DE); SCHOLAK, Gerald, 52066 Aachen (DE)
(74) Representative: Pet, Robert Jacob
(86) International application number: PCT/IB2005/052848
(87) International publication number: WO 2006/025027

(56) References cited:
- EP-A- 1 134 776
- US-A- 5 363 007
- US-A1- 2003 048 052
- US-A1- 2003 062 839
- US-A1- 2003 209 986
- US-B1- 6 456 008

## Description

The present invention relates to a discharge lamp and a vehicle headlight with a discharge lamp.

Known discharge lamps comprise a discharge vessel for generating an arc discharge between two electrodes. The discharge vessel contains an inert gas, such as Xenon, and metal halides, also referred to as salts. There are discharge lamps known with or without mercury contained in the discharge vessel. Light is generated by an electrical discharge between the electrodes. Metal halides, especially NaI and ScI₃ act as light emitting materials. Such discharge lamps are widely used, e.g. in automobile headlights.

US-A-5402037 shows a discharge lamp with an arc tube sealingly charged with mercury, metal iodide and Xenon as inert gas. The discharge lamp is shown to have an arc tube which is not enclosed in a further envelope, and which has a volume of 20 to 50 µl. It is stated that a density of the mercury in the discharge vessel of 20-40 µg/µl and a density of metal iodide from 6-12 µg/µl, as well as a Xenon gas pressure of 3-6 atm is advantageous for arc tubes of good performance and uniformity with regard to voltage, luminous flux, color temperature and chromaticity.

In practical products today, the amount of metal halides contain in the discharge vessel is usually chosen to be above 8 µg/µl.

EP-A-1150337 shows a mercury-free metal halide lamp. The metal halide lamp includes a light-transmitting discharge vessel with a pair of electrodes. The discharge vessel has an ionisable gas filling containing a rare gas and a metal halide including at least Sodium (Na) or Scandium (Sc). The filling is substantially free of mercury. The rare gas is Xenon under a pressure of 3-15 atm. For the metal halide in the discharge vessel, an amount of 5-110 µg/µl is given. For a quick rise of luminous flux the amount of metal halide should be 30-55 µg/µl. In order to achieve a good color of visible light, an amount of metal halides of 5-35 µg/µl is proposed. Several examples show the salt filling consisting of different compositions including NaI, ScI₃, ZnI₂, DyI₃, TmI₃, NdI₃, CeI₃, HoI₃ and LiI. While exact values of the amount of salt per unit volume of the discharge space is not given, the examples show a relatively high amount of salt filling which is generally above 10 µg/µl.

A problem with discharge lamps is the loss of lumen output over lifetime. The lumen maintenance, measured in percent of lumen output compared to the initial value decreases at long term of e.g. 3000 h burning time up to values in the order of 40-50%.

US 2003/0048052 A1 discloses a discharge lamp comprising an enclosed discharge vessel and an outer bulb made of glass surrounding the discharge vessel. The glass material is doped with sodium in a concentration of at least 10 ppm. The concentration of potassium within the outer bulb material is less than 10 ppm. The discharge vessel contains a filling comprising luminescent substances such as alkali halogenides. The characteristics of the discharge lamp are stable during its service live.

US 2003/0062839 discloses a mercury-free arc tube for a discharge lamp. Within a closed glass bulb tungsten electrode rods are provided opposite each other. A cylindrical ultraviolet-shielding shroud glass is integrally welded to an arc tube body comprising the closed glass bulb. The shroud glass is constituted by silica glass doped with TiO₂, CeO2. Within the glass bulb a starting rare gas, main light emitting metal halide and buffer metal halide are enclosed. The charge pressure of the starting rare gas is 8 to 20 atmospheres. The main light emitting halide is a substance such as NaI and ScI₃. The internal volume of the closed glass bulb is 20 to 50 µl. The charge quantity of the main light emitting halide is in a range of 0.1 mg to 0.6 mg and the charge quantity of the buffer metal halide is in a range of 3 x 10⁴ mg/µl to 2 x 10⁻² mg/µl.

US 5,363,007 relates to a fill in a low-power, high pressure discharge lamp with a metal halide fill of small power rating suitable for general service use. In a gas discharge vessel containing electrodes an ionizable fill of mercury, a noble gas and halides of sodium, scandium and thallium are provided. The mol relation ship between the components of sodium halide and scandium halide is between 5:1 to 24:1. The amount of sodium-scandium-thallium is between 2.5 to 5.5 ml/cm³ with respect to the inner volume of the discharge vessel.

It is an object of the invention to propose a a mercury-free discharge lamp and vehicle headlight with improved long term lumen maintenance.

This object is solved according to the invention by a discharge lamp according to claim 1 and a vehicle headlight according to claim 7. Dependent claims refer to preferred embodiments.

According to the invention, the discharge lamp comprises an outer envelope surrounding the discharge vessel. The outer envelope is made of a transparent material, e. g. quartz glass material. This transparent material contains very little or no potassium (K) up to a maximum concentration of only 10 ppm by relation to the weight. A discharge lamp with a corresponding outer bulb is disclosed in US-A-2003 0048052.

Further, the discharge lamp according to the invention comprises metal halides in a concentration of 3 to 6 µg/µl of volume.

The discharge vessel contains a filling which is free of mercury.

Surprisingly it has been found that a lamp with the above characteristics has a lumen maintenance which is considerably improved over previously known lamps. In lamps according to the invention, a lumen maintenance of about 60% has been observed after 3500 h, whereas prior art lamps only exhibited considerably less. Also, the lamps according to the invention have shown to have an improved physical lifetime, which may even exceed 4000 h burning time.

Advantageously, the salts contained in the discharge vessel are halides from substances selected from the group comprising Na, Sc, In, Tl, Zn, Ce, Cs, Dy, Nd and Th. In preferred embodiments, NaI and ScI₃ with optional addition of ThI₄ and ZnI₂ are proposed.

Generally, it has shown to be highly advantageous for the total salt amount in the discharge vessel to be in the interval of 5 ± 0,5 µg/µl. An even more preferred value would be 5 ± 0,25 µg/µl. This value refers to the mean value considering a number of lamps of the same type. In production, tolerances may be around 5%-10%, which corresponds to 0,4-0,8 µg/µg.

A vehicle headlight according to the invention comprises a reflector and an above-described lamp arranged within the reflector. The reflector may be of parabolic or elliptical shape, or be alternatively a complex-shape reflector.

In the following, comparative examples and an embodiment of the invention are described in detail with reference to the drawing, where

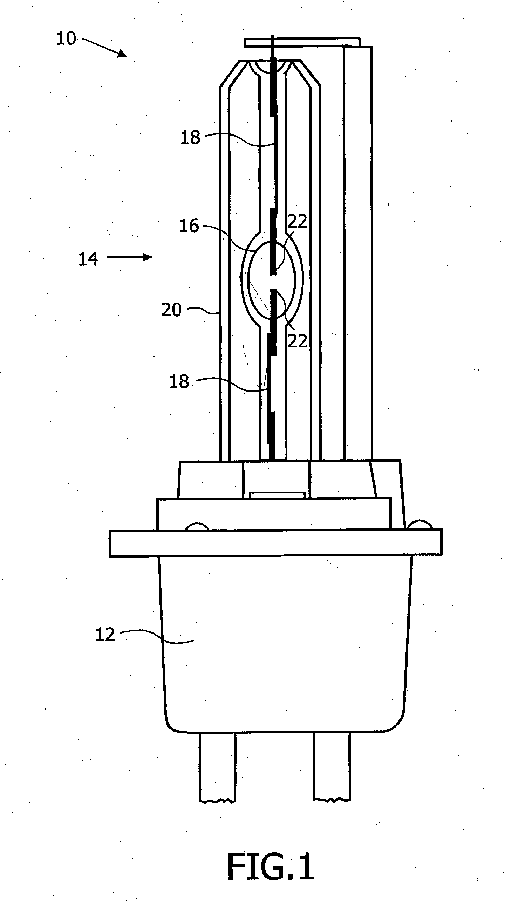

Fig. 1 shows a side view of an embodiment of a discharge lamp.

There are a large number of different designs of discharge lamps known. In the following, a discharge lamp will be generally described. However, it should be clear that the focus of the invention is on the filling of the discharge vessel and construction of the lamp with a special outer bulb, and that further design aspects mentioned are shown here as an example only.

Fig. 1 shows in a side view a discharge lamp 10, comprising a socket 12 and a burner 14. The burner 14 comprises a discharge vessel 16 and lead wires 18 connected to electrodes 22 inside of the discharge vessel 16.

The discharge vessel 16 is made out of a translucent or transparent material, such as ceramics or quartz glass. The interior of discharge vessel 16 is sealed and contains a filling of Xenon as an inert gas and further components which will be discussed below. When a suitable voltage is applied at the electrodes 22, an arc discharge is created inside of discharge vessel 16.

The lamp 10 further comprises an outer bulb 20 of quartz glass, which is arranged around the discharge vessel 16.

The quartz glass material of outer bulbs 20 has a special composition. It contains very little Potassium (ca. 5 ppm) and a small amount of sodium (ca. 65 ppm). An example for an appropriate glass material would be Vycor, available from Coming, Inc.. A discharge lamp with an outer bulb of the above described type is disclosed in US-A-2003 0048052. This document is incorporated by reference with the regard to the special composition of the material of outer bulb 20.

Surprisingly, lamps with an outer bulb of the above type exhibit considerably longer lifetime.

The filling within discharge vessel 16 contains Xenon as inert gas at a gas pressure of 4 to 12 bar. While comparative examples of the filling, which will be discussed below, further contain a quantity of mercury, the filling in accordance with the invention is free of mercury. Finally, the filling contains a certain amount of metal halides.

In a first comparative example, the details of the filling of discharge vessel 16 are as given below under A1, A2. In this example, the amount of salt was 5µg/µl. For comparison, a second comparative example B with a salt filling corresponding to 10µg/µl was tested.

| | | A1, A2 | B |
|---|---|---|---|
| | | (first comparative example) | (second comparative example) |
| Inner volume of discharge vessel | | 30 µl | 30 µl |
| Inert gas Xenon gas pressure | | 5,5 bar (cold pressure) | 5,5 bar (cold pressure) |
| Salt filling | | 150 µg | 300 µg |
| Salt composition | NaI | 40 wt % | 40 wt % |
| | ScI₃ | 4 wt % | 4 wt % |
| | InI | 46 wt % | 46 wt % |
| | TlI | 10 wt % | 10 wt % |
| Hg | | 530 µg | 530 µg |

In a third comparative example C, the same amount of salt in the filling (5 µg/µl) was tested, but with a different salt composition. Also a fourth comparative example D (10 µg/µl) was tested.

| | | C | D |
|---|---|---|---|
| | | (third comparative example) | (fourth comparative example) |
| Inner volume of discharge vessel | | 30 µl | 30 µl |
| Inert gas Xenon gas pressure | | 5,5 bar (cold pressure) | 5,5 bar (cold pressure) |
| Salt filling | | 150 µg | 300 µg |
| Salt composition | NaI | 70 wt % | 70 wt % |
| | ScI₃ | 30 wt % | 30 wt % |
| Hg | | 530 µg | 530 µg |

As experiments have shown, the proposed reduction of metal halides, at least with the salt compositions used, does not seriously degrade lumen output. The lumen output for the above samples was

| | |
|---|---|
| A1/A2 | 2270 lm |
| B | 2290 lm |
| C | 2960 lm |
| D | 3050 lm. |

While lamps according to the above examples contain mercury, a lamp according to an embodiment of the invention is Hg-free. The lamp contains ThI₄ and ZnI₂:

| | | |
|---|---|---|
| Salt composition | NaI | 53 wt% |
| | ScI₃ | 34 wt% |
| | InI | 1 wt% |
| | ThI₄ | 2 wt% |
| | ZnI₂ | 10 wt% |

Again, the lamp according to the embodiment has a discharge vessel of 30 µm inner volume, which is filled with 150 µg of metal halides and Xenon at 5.5 bar.

In the above embodiment of the invention, the lamps showed considerably improved lumen maintenance.

It has thus been shown that the reduced amount of salt within the discharge vessel according to the invention leads to a lamp with improved long-term lumen maintenance.

## Claims

1. Discharge lamp with
- a discharge vessel (16) for generating an arc discharge between two electrodes (22), the discharge vessel (16) containing a mercury-free filling, said filling comprising an inert gas and metal halides,
- that lamp (10) further comprising an outer envelope (20) surrounding that discharge vessel (16), said outer envelope (20) being made of a transparent material, **characterized in that** the transparent material of said outer envelope contains Potassium in a maximum concentration of 10 ppm by relation to the weight, and that
said metal halides are contained in said discharge vessel in an amount of 3-6 µg/µl of the inner volume of the discharge vessel (16).

2. Lamp according to claim 1, where
- said metal halides are contained in said discharge vessel in an amount of 5±0.5 µg per µl of the inner volume of the discharge vessel (16).

3. Lamp according to one of the above claims, where
- said transparent material of said outer envelope (20) contains Sodium in a minimum concentration of 10 ppm by relation to the weight.

4. Lamp according to one of the above claims, where
- said metal halides comprise halides from substances selected from the group comprising Na, Sc, In, Tl, Zn, Ce, Cs, Dy, Nd and Th.

5. Lamp according to claim 4, where
- said filling comprises as metal halides NaI and ScI₃.

6. Lamp according to claim 5, where
- said filling comprises as metal halides NaI, ScI₃, ThI₄ and ZnI₂.

7. Vehicle headlight comprising
- a reflector,
- and a lamp (10) according to one of the above claims arranged within said reflector.

## Patentansprüche

1. Entladungslampe mit
- einem Entladungsgefäß (16) zur Erzeugung einer Lichtbogenentladung zwischen zwei Elektroden (22), wobei das Entladungsgefäß (16) eine quecksilberfreie Füllung enthält, wobei die Füllung ein Inertgas und Metallhalogenide umfasst,
- wobei die Lampe (10) weiterhin einen das Entladungsgefäß (16) umgebenden Außenkolben (20) umfasst, wobei der Außenkolben (20) aus einem transparenten Material gefertigt ist, **dadurch gekennzeichnet**, dass das transparente Material des Außenkolbens Potassium in einer maximalen Konzentration von 10 ppm, bezogen auf das Gewicht, enthält, und dass die Metallhalogenide in dem Entladungsgefäß in einer Menge von 3-6 µg/µl des Innenvolumens des Entladungsgefäßes (16) enthalten sind.

2. Lampe nach Anspruch 1, wobei
- die Metallhalogenide in dem Entladungsgefäß in einer Menge von 5±0,5 µg pro µl des Innenvolumens des Entladungsgefäßes (16) enthalten sind.

3. Lampe nach einem der vorangegangenen Ansprüche, wobei
- das transparente Material des Außenkolbens (20) Natrium in einer minimalen Konzentration von 10 ppm, bezogen auf das Gewicht, enthält.

4. Lampe nach einem der vorangegangenen Ansprüche, wobei
- die Metallhalogenide Halogenide aus Substanzen enthalten, die aus der Gruppe, umfassend Na, Sc, In, Tl, Zn, Ce, Cs, Dy, Nd und Th, ausgewählt werden.

5. Lampe nach Anspruch 4, wobei
- die Füllung als Metallhalogenide Nal und Scl₃ enthält.

6. Lampe nach Anspruch 5, wobei
- die Füllung als Metallhalogenide Nal, Scl₃, Thl₄ und Znl₂ enthält.

7. Fahrzeugscheinwerfer, umfassend
- einen Reflektor
- sowie eine Lampe (10) nach einem der vorangegangenen Ansprüche, die innerhalb des Reflektors angeordnet ist.

## Revendications

1. Lampe à décharge avec
- une enceinte de décharge (16) pour générer une décharge d'arc entre deux électrodes (22), l'enceinte de décharge (16) contenant un remplissage dépourvu de mercure, ledit remplissage comprenant un gaz inerte et des halogénures métalliques,
- ladite lampe (10) comprenant en outre une enveloppe extérieure (20) entourant ladite enceinte de décharge (16), ladite enveloppe extérieure (20) étant constituée d'un matériau transparent, **caractérisée en ce que** le matériau transparent de ladite enveloppe extérieure contient du potassium à une concentration maximale de 10 ppm par rapport au poids, et **en ce que** lesdits halogénures métalliques sont contenus dans ladite enceinte de décharge à une quantité de 3 à 6 µg/ul du volume intérieur de l'enceinte de décharge (16).

2. Lampe selon la revendication 1, dans laquelle
- lesdits halogénures métalliques sont contenus dans ladite enceinte de décharge à une quantité de 5 ±0,5 µg/ul du volume intérieur de l'enceinte de décharge (16).

3. Lampe selon l'une des revendications précédentes, dans laquelle
- ledit matériau transparent de ladite enveloppe extérieure (20) contient du sodium à une concentration minimale de 10 ppm par rapport au poids.

4. Lampe selon l'une des revendications précédentes, dans laquelle
- lesdits halogénures métalliques comprennent des halogénures de substances sélectionnées dans le groupe se composant de Na, Sc, In, Tl, Zn, Ce, Cs, Dy, Nd et Th.

5. Lampe selon la revendication 4, dans laquelle
- ledit remplissage comprend du NaI et du ScI₃ en tant qu'halogénures métalliques.

6. Lampe selon la revendication 5, dans laquelle
- ledit remplissage comprend du NaI, du ScI₃, du ThI₄ et du ZnI₂ en tant qu'halogénures métalliques.

7. Phare de véhicule comprenant :
- un réflecteur,
- et une lampe (10) selon l'une des revendications précédentes agencée à l'intérieur dudit réflecteur.
